Europäisches Patentamt

European Patent Office

Office européen des brevets

(19)

(11) Veröffentlichungsnummer: **0 362 510**

**A1**

(12) # EUROPÄISCHE PATENTANMELDUNG

(21) Anmeldenummer: **89114248.1**

(22) Anmeldetag: **02.08.89**

(51) Int. Cl.5: **F16J 15/32**

(30) Priorität: **24.08.88 DE 3828692**

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **Busak + Luyken GmbH & Co.**
**Handwerkstrasse 5-7**
**D-7000 Stuttgart 80(DE)**

(72) Erfinder: **Edlund, Roy**
**Stangenstrasse 35**
**D-7022 Echterdingen(DE)**
Erfinder: **Müller, Heinz Konrad**
**Aprikosenweg 2**
**D-7050 Walblingen(DE)**

(74) Vertreter: **Patentanwälte Kohler - Schwindling**
**- Späth**
**Hohentwielstrasse 41**
**D-7000 Stuttgart 1(DE)**

(54) **Anordnung zum Abdichten einer hin-und herbewegten Stange.**

(57) Bei herkömmlichen Dichtungsanordnungen mit einem aus einem zähelastischen Kunststoff bestehenden Dichtring (5) und einem gummielastischen Spannring (6), bei denen der Dichtring (5) mit einer Kante (53) am Umfang einer Stange (1) anliegt, ist der an der Kante auftretende Anpreßdruck in hohem Maße von dem Mediumdruck abhängig, weil der Mediumdruck direkt oder über den gummielastischen Spannring (6) auf die Umfangsfläche des Dichtringes (5) wirkt. Der dadurch bei hohem Mediumdruck stark ansteigende Anpreßdruck führt zu hohen Reibungskräften an der Dichtkante (53), die auch noch mit zunehmender Betriebszeit stark ansteigen. Nach der Erfindung wird die Unabhängigkeit vom Betriebsdruck dadurch erreicht, daß der Spannring (6) am hochdruckseitigen Ende des Dichtringes (5) angeordnet ist und durch die Gestaltung der Anlagefläche für den Spannring die Größe der Fläche, auf die der Mediumdruck von außen einwirkt, genau bemessen werden kann.

Fig. 1

## Anordnung zum Abdichten einer hin- und herbewegten Stange

Die Erfindung betrifft eine Anordnung zum Abdichten einer hin-und herbewegten Stange gegenüber einem die Stange mit geringem Abstand umgebenen Gehäuseteil, insbesondere für Stoßdämpfer, mit einem in eine Nut des Gehäuseteiles eingelegten Dichtring aus einem zähelastischen Kunststoff, der einen kleineren Durchmesser hat als die Nut, der nahe seinem hochdruckseitigen Ende an seiner Innenseite eine Kante aufweist, von der eine sich zum niederdruckseitigen Ende hin öffnende Kegelfläche ausgeht, die mit der Umfangsfläche der Stange einen Keilspalt mit kleinem Winkel bildet, und mit einem am Nutgrund anliegenden und zwischen einer Flanke der Nut und der benachbarten Stirnfläche des Dichtringes eingespannten Spannring aus einem gummielastischen Werkstoff, der den Dichtring an der gegenüberliegenden Flanke der Nut in Anlage hält.

Eine solche Anordnung ist aus der DE 27 05 081 A1 bekannt. Bei dieser bekannten Dichtung ist der Spannring am niederdruckseitigen Ende des Dichtringes angeordnet, so daß das abzudichtende Medium den zwischen der Umfangsfläche des Dichtringes und dem Nutgrund vorhandenen Spalt ausfüllt. Auf diese Weise ist gewährleistet, daß die Kraft, mit der der Dichtring mit seiner Kante an der Stange anliegt, dem Druck des abzudichtenden Mediums in etwa proportional ist. Der Spannring ist dabei so angeordnet, daß er gleichzeitig auch eine radiale Anpreßkraft auf den Dichtring ausübt und die Spannkräfte auf die Dichtkante gelenkt werden.

Eine hochdruckseitige Anordnung des Spannringes findet sich auch bei einem aus der DE 36 03 669 A1 bekannten Doppelabstreifer-Anordnung.

Es hat sich gezeigt, daß bei Dichtungsanordnungen dieser Art die Reibung im Laufe der Betriebszeit zunimmt, was auf eine Verbreiterung der von der Kante gebildeten Anlagefläche und eine Glättung dieser Anlagefläche zurückzuführen ist. Außerdem kann bei stark wechselnden Betriebsdrücken, wie sie insbesondere bei Stoßdämpfern auftreten, eine für schwache Betriebsdrücke richtig eingestellte Anpreßkraft bei hohen Betriebsdrücken sehr stark ansteigen und dadurch ebenfalls zu einer unerwünscht hohen Reibung führen.

Demgemäß liegt der Erfindung die Aufgabe zugrunde, eine Dichtungsanordnung zu schaffen, bei der die Reibung möglichst wenig zunimmt, wenn die auf die Dichtungsanordnung einwirkende Druckdifferenz zunimmt, und auch die Reibung im Laufe der Betriebszeit möglichst wenig zunimmt.

Diese Aufgabe wird ausgehend von einer Anordnung der eingangs genannten Art dadurch gelöst, daß von der Kante auch eine sich zum hochdruckseitigen Ende hin öffnende Kegelfläche ausgeht und der Spannring am hochdruckseitigen Ende des Dichtringes angeordnet ist.

Die Anordnung einer sich zum hochdruckseitigen Ende hin öffnenden Kegelfläche, selbst wenn sie sehr kurz ist, verleiht der Kante eine bessere Standfähigkeit, so daß sie weniger zu Abflachungen neigt. Die Anordnung des Spannringes am hochdruckseitigen Ende des Dichtringes verhindert weiterhin, daß der Dichtring auf seiner ganzen Länge an seiner Außenseite von dem abzudichtenden Medium belastet wird. Vielmehr ist es möglich, durch Gestaltung der Anlagefläche für den Spannring die Auswirkung des Mediumdruckes auf die Anpreßkraft an der Kante genau zu dosieren und von dem Mediumdruck weitgehend unabhängig zu machen.

Die erfindungsgemäße Dichtungsanordnung bietet viele Gestaltungsmöglichkeiten bezüglich der Ausbildung und Anordnung des Spannringes ebenso wie bezüglich der Anlagefläche für den Spannring am Dichtring. So kann beispielsweise die im Gehäuseteil angeordnete Nut an ihrem hochdruckseitigen Ende einen Abschnitt größeren Durchmessers aufweisen und der Spannring teilweise in die von dem Abschnitt größeren Durchmessers gebildete ringförmige Aussparung eingreifen. Eine solche Anordnung ist be sonders dann sinnvoll, wenn der Spannring an einer ebenen Stirnfläche des Dichtringes anliegt.

Vorzugsweise wird die Anordnung jedoch so getroffen, daß der Spannring den Dichtring auf einem Abschnitt seiner Außenfläche radial belastet, der sich vom hochdruckseitigen Ende des Dichtringes bis etwa in die Ebene erstreckt, die durch die an der Stange anliegenden Kante des Dichtringes definiert ist. Da auf den Abschnitt der Innenfläche des Dichtringes, der sich von der Dichtkante bis zum hochdruckseitigen Ende des Dichtringes erstreckt, der Mediumdruck im Sinne eines Abhebens des Dichtringes von der Stange einwirkt, wird dieser Druck durch den über den Spannring von außen auf den Dichtring einwirkenden Druck kompensiert. Je nachdem, ob die von dem Spannring radial belastete Außenfläche vor oder hinter der durch die Kante definierten Ebene endet, tritt eine Unter- oder Überkompensation ein. Eine leichte Überkompensation kann dazu beitragen, stets eine sichere Abdichtung zu gewährleisten, auch wenn eine durch Übermaß des Dichtringes bedingte Kantenpressung im Laufe der Zeit nachläßt oder gar gänzlich verschwindet, ohne daß die durch den Mediumdruck bedingte Anpreßkraft bei hohen Drücken zu stark anwächst. Eine solche Kompensation läßt sich aber allein auch schon dadurch erreichen, daß die Außenfläche des Dichtringes derart gestuft ist, daß der Dichtring einen Abschnitt verminderten Durchmessers aufweist, der sich vom hochdruckseitigen Ende des Dichtringes bis etwa in die Ebene erstreckt, die durch die an der Stange anliegenden Kante des Dichtringes definiert ist. Die Kompensation des Mediumdruckes ist dann unabhängig davon, ob der Spannring an dem Abschnitt verminderten Durchmessers des Dichtringes anliegt oder nicht. Liegt der Spannring an dem Abschnitt verminderten Durchmessers des Dichtringes an, so ist die Ausbildung des Spannringes als Quadring besonders vorteilhaft. Der Abstand zwischen dem Ende des radial belasteten Abschnittes der Außenfläche und der durch die Kante definierten Ebene sollte 1 mm nicht überschreiten.

Bei einer besonders bevorzugten Ausführungsform der Erfindung wird ein radial außen liegender Abschnitt der Stirnfläche des Dichtringes von einer Kegelfläche gebildet, die die Umfangsfläche des Dichtringes im Bereich der Ebene schneidet, die durch die an der Stange anliegende Kante definiert ist. In diesem Fall entsteht ein Ringraum mit annähernd dreieckförmigen Querschnitt, in dem der entsprechend dimensionierte Spannring, bei dem es sich vorzugsweise um einen O-Ring handelt, in zusammengedrücktem Zustand gehalten ist, so daß er mit einer durch die Vorpressung gegebenen Kraft an der äußeren Kegelfläche des Dichtringes anliegt. Diese Kraft hat sowohl eine Axialkomponente, durch die der Dichtring an die gegenüberliegende Nutflanke angepreßt wird, als auch eine Radialkomponente, die eine konstante Kantenpressung ergibt. Hierdurch läßt sich bei sehr einfachem Aufbau ein besonders gutes Verhalten der Dichtung erzielen. Dabei ist es zweckmäßig, daß die einen Teil der Stirnfläche bildende Kegelfläche mit der durch die Kante definierten Ebene einen Winkel von 20° bis 40° bildet.

Für die Funktion der erfindungsgemäßen Anordnung ist es wichtig, daß der Dichtring eine ausreichende Biegesteifigkeit besitzt. Ein Körper hoher Biegesteifigkeit wird erzielt, wenn die hochdruckseitige Kegelfläche an der Innenseite des Dichtringes bis zum hochdruckseitigen Ende des Dichtringes reicht und demgemäß die einen Teil der Stirnfläche bildende Kegelfläche, an der der Spannring anliegt, schneidet. Auch für diese Kegelfläche ist es vorteilhaft, wenn sie mit der durch die Kante definierten Ebene einen Winkel von 20° bis 40° bildet.

Weiterhin kann die niederdruckseitige Kegelfläche an der Innenseite des Dichtringes mit der Oberfläche der Stange einen Winkel von 5° bis 15° bilden.

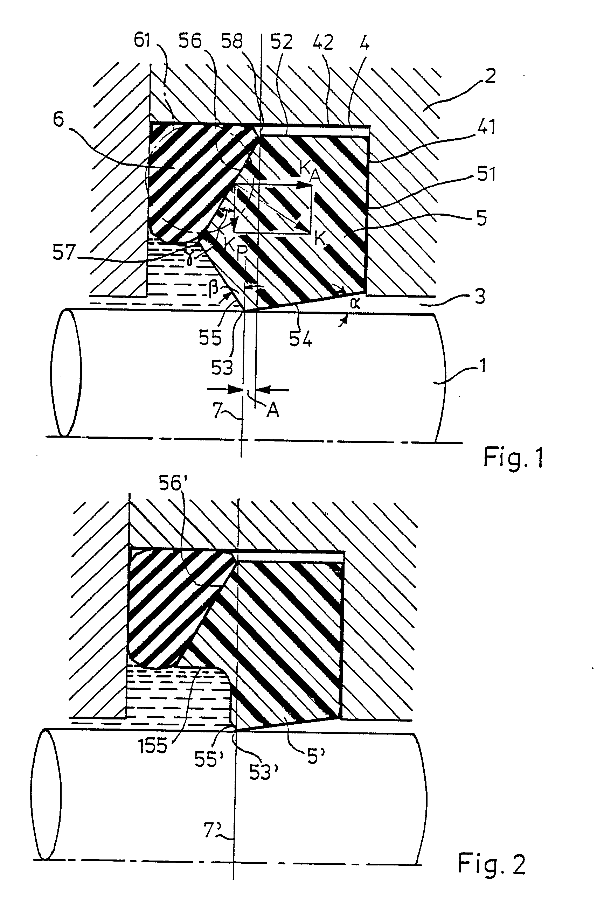

Die Erfindung wird im Folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Die Fig. 1 bis 5 zeigen jeweils einen Querschnitt durch eine andere Ausführungsform einer nach der Erfindung ausgebildeten Dichtungsanordnung.

Die in Fig. 1 dargestellte Anordnung dient zur Abdichtung einer Stange 1 gegenüber einem Gehäuse 2, das eine von der Stange 1 durchsetzte Bohrung 3 aufweist. In dem Gehäuseteil 2 befindet sich eine die Stange 1 umgebende Ringnut 4, in die ein Dichtring 5 und ein Spannring 6 eingelegt sind. Der Dichtring 5 hat einen fünfeckigen Querschnitt und weist eine ebene Stirnfläche 51 auf, mit der er an der benachbarten Flanke 41 der Nut 4 anliegt. Weiterhin hat er eine zylindrische Außenfläche 52, die sich im Abstand vom Nutgrund 42 befindet, so daß der Dichtring 5 von der Nut 4 mit Spiel aufgenommen wird. An seiner der Stange 1 zugewandten Innenfläche weist der Dichtring 5 eine Kante 53 auf, mit der er am Umfang der Stange 1 mit einer gewissen Preßkraft anliegt. Die Kante 53 wird durch den Schnitt zweier Kegelflächen 54, 55 gebildet, von denen die sich von der Kante 53 bis zu der ebenen Stirnfläche 51 erstreckende Kegelfläche 54 mit der Oberfläche der Stange 1 eine Keilspalt mit einem Winkel α von 10° bildet. Die sich zur ersten Kegelfläche 54 entgegengesetzt erstreckende zweite Kegelfläche 55 bildet mit der durch die Kante 53 definierten Ebene 7 einen Winkel ß von 35°. Die fünfte Seite des Fünfeckes wird schließlich von einer äußeren Kegelfläche 56 gebildet, die vom Ende der zylindrischen Umfangsfläche 52 ausgeht und die innere Kegelfläche 55 schneidet. Dabei erstreckt sich diese äußere Kegelfläche 56 von dem Schnittpunkt 57 mit der inneren Kegelfläche 55 bis zu einer Stelle 58, die um einen Abstand A neben der durch die Kante 53 definierten Ebene 7 liegt, und zwar in Richtung auf die ebene Stirnfläche 51 des Dichtringes. Die äußere Stirnfläche 56 bildet mit der durch die Kante 53 definierten Ebene 7 einen Winkel von 30°.

Der Dichtring 6 befindet sich in dem Ringraum, der von der äußeren Kegelfläche 56, dem Nutgrund 42 und der zweiten Nutflanke 43 begrenzt wird. Dieser Ringraum hat einen annähernd dreieckförmiger Querschnitt. Der Spannring 6 wird von einem O-Ring gebildet, dessen Dimensionen im spannungslosen Zustand in Fig.1 durch einen strichpunktierten Kreis 61 wiedergegeben wird. Der Spannring 6 wird daher in der aus Fig. 1 ersichtlichen Weise verformt und erhält dadurch eine Vorpressung, die bewirkt, daß der Spannring mit einer durch die Vorpressung gegebenen Kraft K an der äußeren Kegelfläche 56 anliegt. Wegen der Neigung der Kegelfläche 56 hat diese Kraft K eine Axialkomponente $K_A$ und eine Radialkomponente $K_R$. Die Axialkomponente $K_A$ bewirkt, unabhängig von dem Druck des abzudichtenden Mediums, daß der Dichtring 5 mit seiner ebenen Stirnfläche 51 an der benachbarten Flanke 41 der Nut 4 angepreßt wird. Die Radialkomponente $K_R$ bewirkt das Anpressen des Dichtringes 5 mit seiner Kante 53 an den Umfang der Stange 1 mit einer ebenfalls vom Mediumdruck unabhängigen Kraft.

Die beschriebene Anordnung wird in der Weise eingebaut, daß der Spannring 6 dem abzudichtenden Medium zugewandt ist, der Dichtring 5 also mit seiner niederdruckseitigen Stirnfläche 51 an der Flanke 41 der Nut 4 anliegt. Der gummielastische Spannring 6 dichtet daher den Ringraum zwischen der Umfangsfläche 52 des Dichtringes 5 und dem Nutgrund 42 gegen das Druckmedium ab. Allerdings überträgt der gummielastische Spannring 6 den Mediumdruck auf die äußere Kegelfläche 56 des Spannringes 5, so daß der Mediumdruck einerseits die Kraft erhöht, mit der der Dichtring 5 an die Flanke 41 der Nut 4 angepreßt wird, und andererseits auch auf den Spannring 5 eine Radialkraft ausübt. Dieser Radialkraft wirkt jedoch die Kraft entgegen, die unmittelbar vom Druckmedium auf die innere Kegelfläche 55 ausgeübt wird. Wenn beide Kegelflächen die gleiche axiale Länge haben, die äußere Kegelfläche 56 also in der durch die Dichtkante 7 definierten Ebene endet, haben sich die auf die beiden Kegelflächen ausgeübten Kräfte gegenseitig auf. Die Anpreßkraft an der Kante 53 wäre dann druckunabhängig. Bei dem dargestellten Ausführungsbeispiel ist jedoch die axiale Länge der äußeren Kegelfläche 56 etwas größer, so daß der Druck des abzusperrenden Mediums die Anpreßkraft an der Kante 53 erhöht. Da der Abstand A zwischen der durch die Kante 53 definierten Ebene 7 und der Stelle 58, an der die äußere Kegelfläche 56 endet, nur gering ist, ist dieser druckabhängige Anteil der Anpreßkraft verhältnismäßig klein und führt nicht bei hohem Druck des abgedichteten Mediums zu einem übermäßigen Anstieg der Anpreßkraft. In der Praxis soll der Abstand A nicht mehr als 1 mm betragen.

Wie ersichtlich, wird bei der beschriebenen Anordnung die Anpreßkraft der Dichtung an der Kante 53 im wesentlichen durch die Vorpressung des Spannringes 6 bestimmt und kann daher durch die Dimensionierung dieses Spannringes auf einen für den jeweiligen Anwendungszweck optimalen Wert eingestellt werden. Weiterhin kann die Anpreßkraft durch die Dimensionierung des Dichtringes bestimmt werden, der ein gewisses Übermaß erhalten kann, so daß er unter seiner eigenen Vorspannung mit einer gewissen Anpreßkraft am Umfang der Stange 1 anliegt. Da jedoch der Dichtring aus einem zähelastischen Kunststoff besteht, beispielsweise aus einem verstärkten PTFE, besteht die Gefahr, daß die durch ein solches Übermaß erzeugte Vorspannung im Laufe der Zeit abnimmt und möglicherweise ganz verschwindet. Die Bemessung der äußeren Kegelfläche 56 bietet weiterhin die Möglichkeit, die Anpreßkraft in Abhänigigkeit vom Mediumdruck zu beeinflussen. Bei gleicher axialer Länge von innerer und äußerer Kegelfläche ist der Einfluß des Mediumdruckes auf die Anpreßkraft praktisch eliminiert. Wird die äußere Kegelfläche 56 axial kürzer ausgebildet als die innere Kegelfläche 55, so daß also der Schnittpunkt 58 mit der Umfangsfläche 52 des Dichtringes vor der durch die Kante 53 definierten Ebene 7 liegt, tritt sogar mit zunehmendem Mediumdruck eine zunehmende Entlastung des Dichtringes 5 ein, es nimmt also die Anpreßkraft an der Kante 53 ab. Diese druckabhängigen Variationen der Anpreßkraft sollen jedoch klein bleiben, so daß der Abstand A zwischen der Stelle 58 und der Ebene 7 einen Betrag von 1 mm nicht überschreiten soll.

Die beschriebene Dichtungsanordnung hat im übrigen den besonderen Vorteil, daß der Dichtring einen einfach herstellbaren Querschnitt mit hoher Biegesteifigkeit aufweist, so daß Störungen des Dichtungsverhaltens durch eine Änderung der Querschnittsform des Dichtringes nicht auftreten können. Weiterhin läßt diese Gestaltung relativ große Toleranzen bei der Ausbildung des Dichtringes und des O-Ringes zu, für den handelsübliche O-Ringe Verwendung finden können.

Die Ausführungsform nach Fig. 2 unterscheidet sich von der Ausführungsform nach Fig. 1 lediglich dadurch, daß die hochdruckseitige, innere Kegelfläche 55′ eine nur geringe Länge hat und ihr Ende durch eine Übergangsfläche 155 mit dem Ende der äußeren Kegelfläche 56′ verbunden ist, welche Übergangsfläche 155 eine Art stufenförmige Aussparung im Dichtungsring 5′ begrenzt. Weiterhin erstreckt sich die äußere Kegelfläche 56′ genau bis in die durch die Kante 53′ definierte Ebene 7′, so daß sich die auf den Dichtring 5′ wirkenden, durch den Mediumdruck bedingten Kräfte ausgleichen.

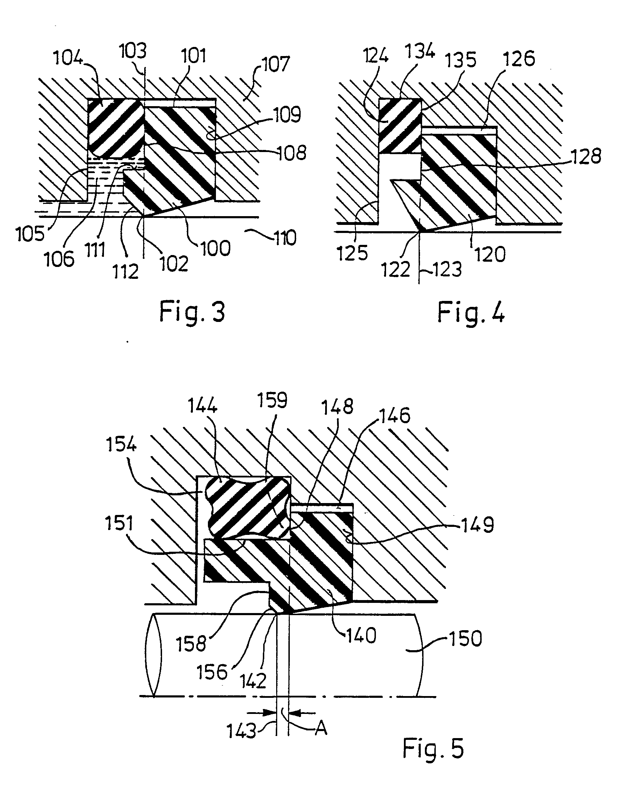

Fig. 3 zeigt ein Ausführungsbeispiel, bei dem die Außenfläche 101 des Dichtringes 100 derart gestuft ist, daß der Dichtring einen Abschnitt verminderten Durchmessers aufweist, der sich vom hochdruckseitigen Ende des Dichtringes bis zu der durch die Kante 102 definierten Ebene 103 erstreckt. Der gummielastische Spannring 104, bei dem es sich wiederum um einen O-Ring handelt, ist zwischen der benachbarten Flanke 105 der Nut 106, in der sich der Dichtring 100 und der Spannring 104 im Gehäuseteil 107 befinden, und der in der Ebene 103 liegenden Stirnfläche 108 eingespannt, die sich am Ende des Abschnittes verminderten Durchmessers des Dichtringes 100 befindet. Dabei erhält der Spannring wiederum eine Vorpressung, die bewirkt, daß der Dichtring mit seiner niederdruckseitigen Stirnfläche 109 an der benachbarten Nutflanke fest anliegt.

In diesem Fall wird die Anpreßkraft, mit der der Dichtring 100 mit seiner Kante 102 an der Stange 110 anliegt, ausschließlich durch die Vorspannung des Dichtringes erzeugt, der in Bezug auf die Stange 110 mit Übermaß hergestellt worden ist. Der Spannring 104 übt wegen seiner Anlage an der zur Achse des Dichtringes senkrechten Stirnfläche 108 keine Radialkraft auf den Dichtring aus. Ebensowenig wird der Dichtring in Radialrichtung durch das Druckmedium belastet, weil die Stirnfläche 108, an der O-Ring 104 anliegt, in der durch die Kante 102 definierten Ebene 103 liegt. Es wäre allerdings möglich, durch Verschieben der Stirnfläche 108 gegenüber der Ebene 103 die an der Kante 102 wirkende Anpreßkraft in Abhängigkeit vom Mediumdruck zu erhöhen oder zu vermindern, indem die Stirnfläche 108 vor oder hinter der Ebene 103 angeordnet wird, so daß die auf die Umfangsfläche 111 des Abschnittes verminderten Durchmessers und auf die hochdruckseitige Kegelfläche 112 wirkenden Druckkräfte einander aufheben.

Im übrigen ist auch die Dichtungsanordnung nach Fig. 3 in der anhand Fig. 1 beschriebenen Weise ausgebildet und hat auch die gleiche Wirkung.

Die Ausführungsform nach Fig. 4 unterscheidet sich von der Ausführungsform nach Fig. 3 im wesentlichen nur dadurch, daß der Spannring 124, der wieder an der Stirnfläche 128 des Dichtringes 120 anliegt, der einen Abschnitt verminderten Durchmessers aufweist, teilweise in eine Aussparung 134 eingreift, die von einem Abschnitt größeren Durchmessers der den Dichtring 120 und den Spannring 124 aufnehmenden Nut 126 gebildet wird. Die von der hochdruckseitigen Nutflanke 125 abgewandte Flanke 135 der Aussparung 134 liegt in der gleichen Ebene 123 wie die Stirnfläche 128 des Dichtringes 120. In diesem Fall fällt diese Ebene wieder mit der durch die Kante 122 definierten Ebene zusammen. Es versteht sich, daß auch hier wieder die Stirnfläche 128 und demgemäß auch die Flanke 135 der Aussparung 134 gegenüber dieser durch die Kante 122 definierten Ebene 123 verschoben sein könnte, um dadurch von dem Mediumdruck einen Teil des an der Kante 122 herrschenden Anpreßdruckes zu erzeugen.

Die Ausführungsform nach Fig. 5 ist eine Art Kombination der Ausführungsformen nach den Fig. 2 und 4. In diesem Fall weist der Dichtring 140 nicht nur an seiner Außenseite eine Stufe mit der Stirnfläche 148, sondern auch an seiner Innenseite eine Stufe mit der stirnfläche 158 auf, die sich in einem kleinen Abstand von der Kante 142 befindet, mit der der Dichtring 140 an der Stange 150 anliegt. Demgemäß hat die hochdruckseitige Kegelfläche 156 eine nur relativ kurze axiale Ausdehnung. Andererseits hat die äußere Stufe des Dichtringes 140 eine solche Länge, daß deren Stirnfläche 148, von der Hochdruckseite her gesehen, jenseits der Ebene 143 angeordnet ist, die durch die Kante 142 definiert ist. Demgemäß ist der auf die Umfangsfläche 151 der Stufe wirkende Mediumdruck größer als der auf die Innenseite des Dichtringes 140 bis zur Kante 142 wirkende Druck und es trägt der Mediumdruck zur Erhöhung der Anpreßkraft an der Kante 142 bei.

Als Spannring 144 findet in diesem Fall ein Quadring Verwendung, der wiederum in eine Aussparung 154 am Grund der Nut 146 eingelegt ist. In diesem Fall steht der Spannring 144 nur unter radialer Vorpressung, nicht jedoch unter horizontaler Vorpressung, da die Aussparung 154 breiter ist als die axiale Ausdehnung des Spannringes 144. Die axiale Anpressung erfolgt daher nur, wenn auf die Dichtung ein Mediumdruck einwirkt. Daher sollte diese Ausführungsform nur dann verwendet werden, wenn im Betrieb ständig ein ausreichend hoher Mediumdruck vorliegt, um den Dichtring 140 einwandfrei an der niederdruckseitigen Nutflanke 149 in Anlage zu halten.

Die Verwendung eines Quadringes als Spannring 144 hat den Vorteil, daß die Eckwulst 159 des Quadringes, die sowohl an der Stirnfläche 148 als an der Umfangsfläche 151 der äußeren Stufe des Dichtringes 140 anliegt, eine einwandfreie Übertragung einer Axialkraft und auch einer Radialkraft auf die Kante 142 gewährleistet. Bei dieser Ausführungsform der Dichtungsanordnung setzt sich demgemäß die auf die Kante 142 wirkende Anpreßkraft aus drei Komponenten zusammen, nämlich der durch das Übermaß des Spannringes 140 gegebenen Anpreßkraft, der durch die radiale Vorspannung des Dichtringes 144 gegebenen Anpreßkraft und einer vom Mediumdruck abhängigen Anpreßkraft, welche durch den Abstand A der vom Spannring 144 belasteten Stirnfläche 148 gegenüber der durch die Kante 142 definierten Ebene 153 bedingt ist. Von diesen Kräften kann die durch das Übermaß erzeugte Kraft im Laufe der Betriebszeit abnehmen oder ganz verschwinden, während die durch den Spannring 144 erzeugte Kraft als im wesentlichen konstant angesehen werden kann.

Die vorstehende Beschreibung verschiedener Ausführungsbeispiele hat deutlich gemacht, daß sich die Erfindung in vielfältiger Weise verwirklichen läßt. Daher können die bei den einzelnen Ausführungsbeispielen angewendeten Merkmale in vielfältiger Weise kombiniert werden, ohne dadurch den von der durch die Patentansprüche definierten, grundsätzlichen Ausbildung der Dichtungsanordnung abzuweichen.

**Ansprüche**

1. Anordnung zum Abdichten einer hin- und herbewegten Stange gegenüber einem die Stange mit geringem Abstand umgebenden Gehäuseteil, insbesondere für Stoßdämpfer, mit einem in eine Nut des Gehäuseteiles eingelegten Dichtring aus einem zähelastischen Kunststoff, der einen kleineren Durchmesser hat als die Nut, der nahe seinem hochdruckseitigen Ende an seiner Innenseite eine Kante aufweist, von der eine sich zum niederdruckseitigen Ende hin öffnende Kegelfläche ausgeht, die mit der Umfangsfläche der Stange einen Keilspalt mit kleinem Winkel bildet, und mit einem am Nutengrund anliegenden und zwischen einer Flanke der Nut und der benachbarten Stirnfläche des Dichtringes eingespannten Spannring aus einem gummielastischen Werkstoff, der den Dichtring an der gegenüberliegenden Flanke der Nut in Anlage hält,
dadurch gekennzeichnet, daß
von der Kante (53, 142) auch eine sich zum hochdruckseitigen Ende hin öffnende Kegelfläche (55, 156) ausgeht und der Spannring (6, 144) am hochdruckseitigen Ende des Dichtringes (5, 140) angeordnet ist.

2. Anordnung nach Anspruch 1, dadurch gekennzeichnet, daß die im Gehäuseteil angeordnete Nut (146) an ihrem hochdruckseitigen Ende einen Abschnitt größeren Durchmessers aufweist und der Spannring (144) teilweise in die von dem Abschnitt größeren Durchmessers gebildete ringförmige Aussparung (154) eingreift.

3. Anordnung nach Anspruch 1 oder 2, dadurch gekennzeichnet, daß der Spannring (6, 144) den Dichtring (5, 140) auf einem Abschnitt seiner Außenfläche (56, 151) radial belastet, der sich vom hochdruckseitigen Ende des Dichtringes bis etwa in die Ebene (7, 143) erstreckt, die durch die an der Stange (1, 150) anliegenden Kante (53, 142) des Dichtringes (5, 140) definiert ist.

4. Anordnung nach einem der vorhergehenden Ansprüche, dadurch gekennzeichnet, daß die Außenfläche des Dichtringes (140) derart gestuft ist, daß der Dichtring einen Abschnitt (151) verminderten Durchmessers aufweist, der sich vom hochdruckseitigen Ende des Dichtringes bis etwa in die Ebene (143) erstreckt, die durch die an der Stange (150) anliegenden Kante (142) des Dichtringes (140) definiert ist.

5. Anordnung nach den Ansprüchen 3 und 4, dadurch gekennzeichnet, daß der Spannring (144) an dem Abschnitt (151) verminderten Durchmessers des Dichtringes (140) anliegt.

6. Anordnung nach den Ansprüchen 2 und 5, dadurch gekennzeichnet, daß der Spannring (144) ein Quadring ist.

7. Anordnung nach Anspruch 3, dadurch gekennzeichnet, daß ein radial außen liegender Abschnitt der Stirnfläche des Dichtringes (5) von einer Kegelfläche (56) gebildet wird, die die Umfangsfläche (52) des Dichtringes (5) im Bereich der Ebene (7) schneidet, die durch die an der Stange (1) anliegende Kante (53) definiert ist.

8. Anordnung nach Anspruch 7, dadurch gekennzeichnet, daß die einen Teil der Stirnfläche bildende Kegelfläche (56) mit der durch die Kante (53) definierten Ebene (7) einen Winkel ( ) von 20° bis 40° bildet.

9. Anordnung nach Anspruch 7 oder 8, dadurch gekennzeichnet, daß die hochdruckseitige Kegelfläche (55) an der Innenseite des Dichtringes (5) die einen Teil der Stirnfläche bildende Kegelfläche (56) schneidet und ebenfalls mit der durch die Kante (53) definierten Ebene (7) einen Winkel ($\beta$) von 20° bis 40° bildet.

10. Anordnung nach einem der Ansprüche 7 bis 9, dadurch gekennzeichnet, daß der Spannring (6) ein O-Ring ist.

11. Anordnung nach einem der Ansprüche 3 bis 10, dadurch gekennzeichnet, daß der von dem Spannring (6, 144) radial belastete Abschnitt (56, 151) des Dichtringes (5, 140) an einer Stelle endet, die nicht mehr als 1 mm von der durch die Kante (53, 142) definierten Ebene (7, 143) entfernt ist.

12. Anordnung nach einem der vorhergehenden Ansprüche, dadurch gekennzeichnet, daß die niederdruckseitige Kegelfläche (54) an der Innenseite des Dichtringes (5) mit der Oberfläche der Stange (1) einen Winkel ($\alpha$) von 5° bis 15° bildet.

Fig. 1

Fig. 2

P 53 23 EP

Fig. 3

Fig. 4

Fig. 5

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 606 886 (MÜLLER)<br>* Spalte 8, Zeilen 38-45; Spalte 9, Zeilen 5-49; Spalte 10, Zeilen 37-62; Figuren 1,3,4,8 *<br>--- | 1,3-5,7,9,10,12 | F 16 J 15/32 |
| A | DE-A-3 642 721 (ELRING)<br>* Insgesamt *<br>----- | 1 | |

|  |
|---|
| RECHERCHIERTE SACHGEBIETE (Int. Cl.5) |
| F 16 J |

Der vorliegende Recherchenbericht wurde für alle Patentansprüche erstellt

| Recherchenort | Abschlußdatum der Recherche | Prüfer |
|---|---|---|
| DEN HAAG | 28-12-1989 | LEGER M.G.M. |